# EUROPÄISCHE PATENTSCHRIFT

(11) **EP 2 485 012 B1**
(45) Veröffentlichungstag und Bekanntmachung des Hinweises auf die Patenterteilung: **20.05.2015**
(21) Anmeldenummer: 11153450.9
(22) Anmeldetag: 04.02.2011
(51) Int. Cl.: G01D 3/028, G01N 27/74

(54) **Messverfahren**
Measuring method
Procédé de mesure

(43) Veröffentlichungstag der Anmeldung: 08.08.2012
(73) Patentinhaber: Siemens Aktiengesellschaft, 80333 München (DE)
(72) Erfinder: Bitter, Ralf, 76139, Karlsruhe (DE); Heffels, Camiel, 76297, Stutensee-Büchig (DE); Hörner, Thomas, 76135, Karlsruhe (DE); Kionke, Martin, 76137, Karlsruhe (DE)

(56) Entgegenhaltungen:
- WO-A1-98/12552
- WO-A1-2010/133566
- DE-A1- 19 803 990
- DE-A1-102005 014 145

## Beschreibung

Die Erfindung betrifft ein Messverfahren, bei dem am Anfang einer Messkette eine Messgröße aufgenommen und im Verlauf der Messkette durch Umwandlung zu einem Messergebnis weiterverarbeitet wird, wobei an einer ersten Stelle der Messkette die originale oder umgewandelte Messgröße mit einer vorgegebenen Modulationsfrequenz moduliert wird.

Eine Messkette zur Messung einer elektrischen oder nichtelektrischen Messgröße besteht aus unterschiedlichen Messgliedern zur Aufnahme der Messgröße, Erzeugung eines zur Weiterverarbeitung geeigneten elektrischen Messsignals, Anpassung wie z. B. Digitalisierung, Filterung, Verstärkung, Entzerrung des Messsignals und Ausgabe eines Messergebnisses (Messwertes). Der Aufnehmer wandelt die Messgröße entweder direkt oder über andere physikalische Größen in das elektrische Messsignal um. Beispielsweise wird bei der paramagnetischen Sauerstoffmessung der Effekt ausgenutzt, dass sich Sauerstoffmoleküle eines Messgases in einem inhomogenen Magnetfeld in Richtung höherer Feldstärke bewegen. Daraus resultierende Änderungen der lokalen Gasdichte, Strömungen oder Druckänderungen können mittels geeigneter Messfühler, wie z. B. Wärmeleitfähigkeits-, Strömungs- oder Druckfühler, erfasst und in ein elektrisches Signal zur Weiterverarbeitung umgewandelt werden (DE 8703944 U1, WO 98/12552 A1, DE 19803990 A1, DE 102005014145 A1).

In vielen Fällen wird die originale oder umgewandelte Messgröße mit einer vorgegebenen Modulationsfrequenz moduliert, um ein Wechselsignal zu erhalten, dass sich einfacher und störungsfreier verarbeiten lässt. So ermöglicht die spätere Demodulation des Messsignals mittels eines Lock-In-Verstärkers die Verarbeitung kleinster Messsignale auch in Gegenwart von starkem Rauschen. Im Falle der paramagnetischen Sauerstoffmessung erfolgt die Modulation mittels des Magnetfeldes (Wechselfeld), so dass z. B. eine zu dem der Sauerstoffgehalt des Messgases proportionale Wechsel-Gasströmung erhalten wird, die in ein elektrisches Wechsel-Messsignal umgesetzt wird. Dieses Messsignal ist jedoch auch von der Modulationstiefe, hier der Amplitude des Magnetfeldes, abhängig, so dass Schwankungen oder schleichende Änderungen bei der Erzeugung des Magnetfeldes ebenso wie äußere Störmagnetfelder (z. B. von benachbarten paramagnetischen Sauerstoffmessgeräten) das Messergebnis störend beeinflussen.

Weiterhin kann das Messergebnis durch Veränderungen in den das Messsignal verarbeitenden Messgliedern oder durch Störeinflüsse von außen beeinträchtigt werden. Beispiele dafür sind alterungs- oder temperaturbedingte Messfühler- oder Elektronikdriften, oder Störfelder.

Der Erfindung liegt daher die Aufgabe zugrunde, Veränderungen der Messkette gegenüber einem Kalibrationszustand zu erkennen und deren Einfluss auf das Messergebnis zu kompensieren.

Gemäß der Erfindung wird die Aufgabe durch das in Anspruch 1 angegebene Messverfahren gelöst.

Vorteilhafte Weiterbildungen des erfindungsgemäßen Verfahrens sind den Unteransprüchen zu entnehmen.

Gegenstand der Erfindung ist somit ein Messverfahren, bei dem am Anfang einer Messkette eine Messgröße aufgenommen und im Verlauf der Messkette durch Umwandlung zu einem Messergebnis weiterverarbeitet wird, wobei an einer ersten Stelle der Messkette die originale oder umgewandelte Messgröße mit einer vorgegebenen Modulationsfrequenz moduliert wird, dadurch gekennzeichnet,
- dass an einer zweiten Stelle der Messkette, die in Richtung der Weiterverarbeitung hinter der ersten Stelle liegt, zu der umgewandelten Messgröße eine Größe aufaddiert wird, die dieselbe Frequenz wie die Modulation aufweist, gegenüber dieser aber um einem vorgegebenen Phasenwinkel verschoben ist, so dass das Messergebnis einen durch Amplitude und Phase beschriebenen Vektor beinhaltet,
- dass die Messkette mit unterschiedlichen bekannten Werten der Messgröße kalibriert wird, wobei unterschiedliche Vektoren erhalten werden, die eine Kennlinie definieren, und
- dass ein unbekannter Wert der Messgröße aus demjenigen Punkt der Kennlinie ermittelt wird, in dem der dabei erhaltene Vektor oder seine Verlängerung die Kennlinie schneidet.

Indem zu der beispielsweise in ein Messsignal oder eine physikalische Zwischengröße umgewandelten modulierten Messgröße eine phasenverschobene Größe gleicher Frequenz hinzuaddiert wird, erhält man für die Weiterverarbeitung einen Messsignalvektor, der durch Betrag und Phase gekennzeichnet ist. Bei der Kalibration der Messkette mit unterschiedlichen bekannten Werten der Messgröße definieren die dabei erhaltenen Vektoren des Messergebnisses eine Kennlinie. Solange bei einer späteren Messung die Messbedingungen in der Messkette den Kalibrationsbedingungen entsprechen, wird man als Messergebnis einen Vektor erhalten, der auf einen Punkt der Kennlinie zeigt, so dass aus diesem Punkt der unbekannte Wert der Messgröße ermittelt werden kann. Im Falle einer Störung, ob sie nun in einem Glied der Messkette vorhanden ist oder von außen auf die Messkette einwirkt, wird sich der Betrag des Vektors ändern, so dass die Spitze des Ergebnisvektors außerhalb der Kennlinie zu liegen kommt. Dadurch lässt sich das Vorliegen einer Störung sehr leicht diagnostizieren. Da eine Störung im Wesentlichen den Betrag des Vektors, jedoch nicht oder kaum seine Phase beeinflusst, ist eine Korrektur des Messergebnisses möglich, indem der Ergebnisvektor bei unverändertem Phasenwinkel bis auf die Kennlinie verkürzt oder verlängert wird. Aus diesem Punkt auf der Kennlinie kann dann der korrekte Wert der Messgröße ermittelt werden.

Da auch die Modulation der Messgröße Störungen unterliegen kann, wird vorzugsweise die zu der umgewandelten Messgröße aufaddierte Größe in der Weise aus der Modulation der Messgröße abgeleitet, dass die Amplitude der aufaddierten Größe proportional zur Modulationstiefe ist.

Bei einer paramagnetischen Messung des Sauerstoffgehalts eines Messgases wird die Messgröße (Sauerstoffgehalt) in eine Zwischengröße (z. B. Strömung, Druck) umgeformt, die schließlich in ein weiterverarbeitbares elektrisches Messsignal umgewandelt wird. Die Umwandlung der Messgröße in die Zwischengröße erfolgt mittels eines Wechselmagnetfeldes, das auch zur Modulation der umgewandelten Messgröße dient. Dabei wird im Rahmen der Erfindung vorzugsweise mit demselben Magnetfeld auch eine Vergleichsgröße (konstanter Sauerstoffgehalt eines Vergleichsgases) in eine entsprechende Zwischengröße (z. B. Strömung, Druck) umgeformt. Die aus der Messgröße und aus der Vergleichgröße gewonnenen Zwischengrößen werden phasenverschoben addiert oder subtrahiert, bevor sie in das elektrische Messsignal umgewandelt werden. Alternativ werden die beiden Zwischengrößen getrennt in elektrische Messsignale umgewandelt, die dann addiert oder subtrahiert werden, wobei entweder die Addition bzw. Subtraktion oder die Erzeugung der Zwischengrößen phasenverschoben erfolgt. Wenn es sich bei der Zwischengröße um die Strömung oder den Druck eines Gases handelt, kann die Phasenverschiebung durch die Länge der Leitung oder allgemein durch ein pneumatisches Filter zwischen der Stelle, wo die Zwischengröße erzeugt wird, und der Stelle, wo sie detektiert wird, eingestellt werden.

Zur weiteren Erläuterung der Erfindung wird im Folgenden auf die Figuren der Zeichnung Bezug genommen; im Einzelnen zeigen:
- Figur 1: ein vereinfachtes Beispiel für eine Messkette,
- Figur 2: ein vereinfachtes Beispiel für die Ermittlung des Messergebnisses aus einer von Vektoren gebildeten Kennlinie, die
- Figuren 3 und 4: zwei vereinfachte Beispiele für die Bildung einer gegenüber der Modulation der Messgröße phasenverschobenen Größe und die
- Figuren 5 bis 7: unterschiedliche Beispiele einer paramagnetischen Sauerstoffmessanordnung.

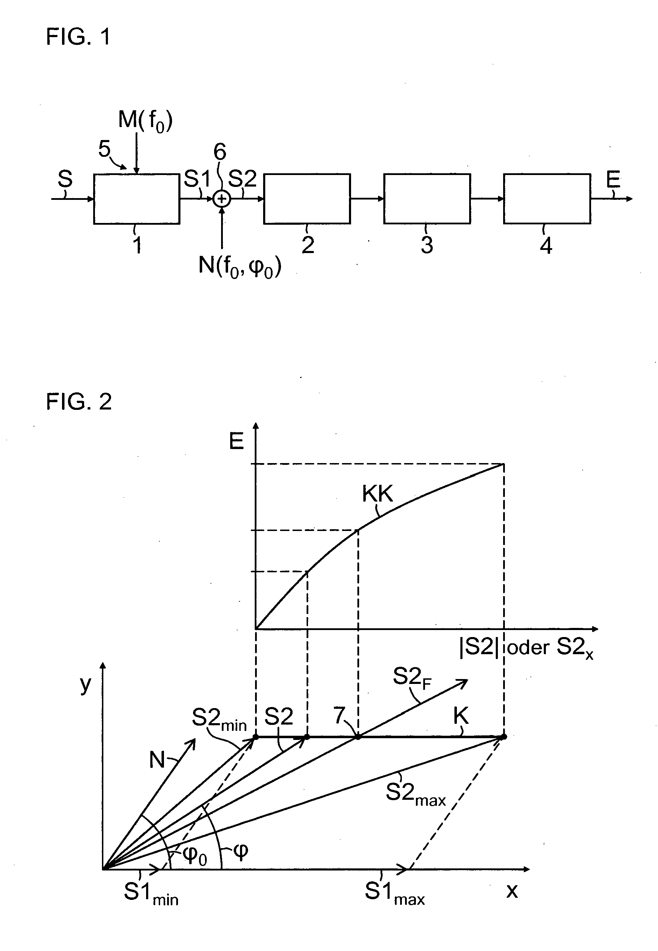

Figur 1 zeigt ein vereinfachtes Blockschaltbild einer Messkette zum Messen einer Messgröße S. Die Messgröße S wird von einem ersten Messglied (Aufnehmer) 1 aufgenommen und in ein elektrisches Messsignal S1 umgewandelt. Das elektrische Messsignal S1 wird in weiteren Messgliedern, z. B einem Analogverstärker 2, einem Analog-/Digital-Umsetzer 3 und einer Recheneinrichtung 4 zu einem Messergebnis E verarbeitet. Bei der Aufnahme der Messgröße S erfolgt an einer Stelle 5 eine Modulation mit einem Modulationssignal M der Frequenz f₀, so dass das Messsignal S1 ein Wechselsignal ist oder einen Wechselsignalanteil enthält, das bzw. der von der Messgröße S und der Modulationsamplitude abhängig ist und die Frequenz f₀ aufweist. Beispielsweise ist der Aufnehmer ein Wärmeleitfähigkeitsdetektor mit einem Heizfaden, der von einem Messgas umspült wird, so dass von dem Heizfaden Wärmeenergie in Abhängigkeit von der spezifischen Wärmeleitfähigkeit des zu messenden Gases abfließt; durch den Wärmeabfluss wird der Heizfaden abgekühlt, so dass sein elektrischer Widerstand und damit der elektrische Heizstrom von der Wärmeleitfähigkeit des Gases abhängig ist. In diesem Fall erfolgt die Modulation dadurch, dass der Heizstrom von einer Wechselspannungsquelle geliefert wird.

An einer zweiten Stelle 6 der Messkette, die hinter der Stelle 5 liegt, an der die Modulation stattfindet, wird der bis dahin umgewandelten Messgröße, hier dem Messsignal S1, eine Größe N hinzuaddiert, die dieselbe Frequenz f₀ wie das Modulationssignal M aufweist, gegenüber diesem aber um einen festen Phasenwinkel ϕ₀ verschoben ist (wegen N(ϕ₀) = -N(180°+ϕ₀) sind Addition und Subtraktion hier gleichwertig). Im weiteren Verlauf der Messkette wird daher das Signal S2 = S1 + N verarbeitet.

Figur 2 zeigt in einem x-y-Koordinatensystem auf der x-Achse den Variationsbereich S1ₘᵢₙ - S1ₘₐₓ des Messsignals S1 bei einem Messbereich zwischen einem minimalen Messwert Sₘᵢₙ und einem maximalen Messwert Sₘₐₓ (Sₘᵢₙ und S1ₘᵢₙ können auch Null sein). Durch die Addition der mit ϕ₀ verschobenen Größe N mit dem Messsignal S1 ergibt sich das Signal S2 in Form eines Vektors mit einer Amplitude |S2| und einer Phase ϕ. Wird im Rahmen einer Kalibrierung der Messkette die Messgröße S zwischen Sₘᵢₙ und S1ₘₐₓ variiert, so definieren die dabei erhaltenen Vektoren eine Kennlinie K in dem Koordinatensystem. Dabei besteht zwischen jedem Punkt auf der Kennlinie K und der Länge |S2| des Vektors S2 oder seiner x-Komponente S2ₓ eine eindeutige Zuordnung. Daher kann, wie der obere Teil der Figur 2 zeigt, aus jeder Vektorlänge |S2| oder jeder x-Komponente S2ₓ des Vektors S2 über eine Kalibrationskennlinie KK das Messergebnis (Messwert der Messgröße S) ermittelt werden.

Die Kalibrationskennlinie KK ist in der Recheneinrichtung 4 hinterlegt. Die Vektorlänge |S2| entspricht dem Betrag des Signals S2. Alternativ kann die x-Komponente S2ₓ mittels eines Lock-In-Verstärkers aus dem Signal S2 extrahiert werden.

Wenn sich die Verhältnisse innerhalb der Messkette hinter der Stelle 6 der Aufschaltung der Größe N ändern, beispielsweise wenn sich die Verstärkung des Verstärkers 2 durch Elektronikdrift ändert oder ein Störsignalanteil durch ein äußeres Störfeld induziert wird, wirkt sich dies auf beide Anteile S1 und N des Signals S2 = S1 + N gleichermaßen aus. D. h., man erhält ein fehlerhaftes Signal S2_{F}, dessen Vektorspitze außerhalb der Kennlinie K liegt (Figur 2). Neben der Erkennung des Fehlers bzw. der Störung können diese aber auch kompensiert werden, indem der Vektor S2_{F} bei unverändertem Phasenwinkel bis auf die Kennlinie K verkürzt oder verlängert wird (Punkt 7). Aus der Länge bzw. der x-Komponente des so korrigierten Vektors kann dann anhand der Kalibrationskennlinie KK der korrekte Messwert bestimmt werden.

Da nur hinter der Stelle 6 der Aufschaltung der Größe N auftretende Störungen und Fehler erkannt und kompensiert werden, liegt diese Stelle vorzugsweise möglichst nahe an der Stelle 5, wo die Modulation erfolgt.

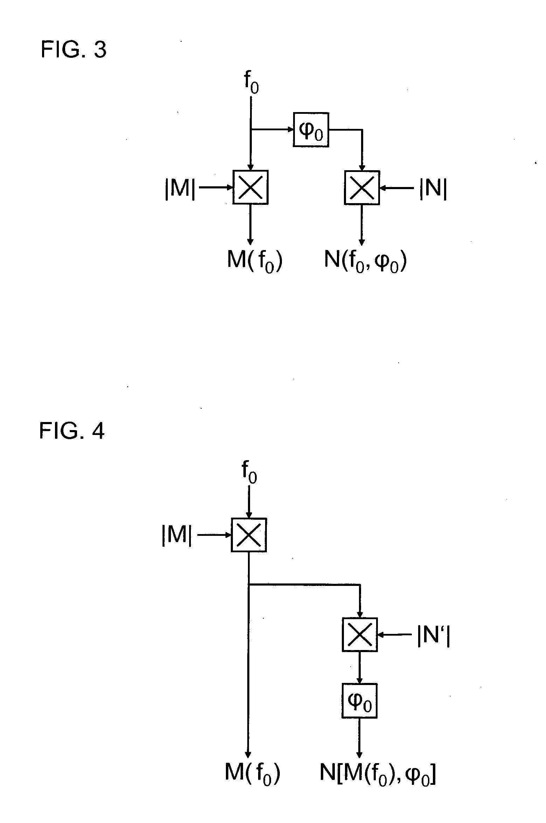

Wie Figur 3 schematisch zeigt, wird im einfachsten Fall die Größe N mit einer konstanten Amplitude |N| synchron zur Frequenz f₀ des Modulationssignals M und mit der Phasenverschiebung ϕ₀ erzeugt. So kann beispielsweise bei einer paramagnetischen Sauerstoffmessung aus dem Wechselstrom, mit dem das Magnetfeld erzeugt wird, ein Signal N derselben Frequenz gewonnen werden, das mit einer konstanten Phasenverschiebung zu dem Messsignal S1 addiert wird.

Jedoch kann auch die Modulation selbst Störungen und Veränderungen unterworfen sein, weswegen vorzugsweise, wie Figur 4 zeigt, die Größe N aus dem Modulationssignal M selbst gewonnen wird, so dass die Amplitude |N| der Größe N proportional zur Modulationstiefe |M| ist. Wenn sich die Modulationsamplitude ändert, also beispielsweise bei einer paramagnetischen Sauerstoffmessung die Stärke des Wechselmagnetfeldes, wird dies genauso erkannt und kompensiert, wie obenstehend anhand von Figur 2 beschrieben.

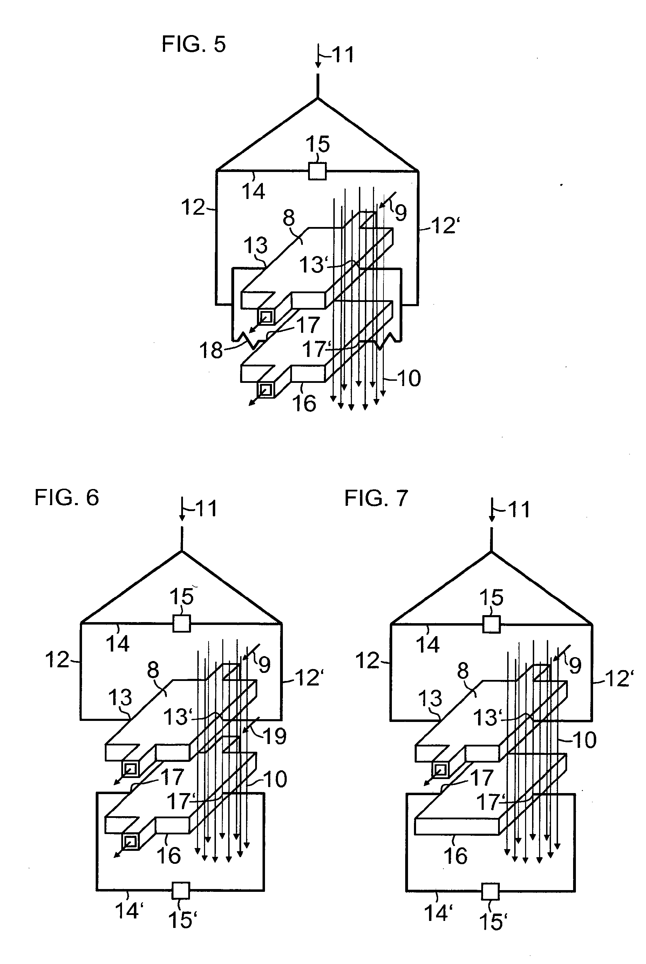

Figur 5 zeigt ein Beispiel für einen eine paramagnetische Sauerstoffmessanordnung. Diese besteht im Wesentlichen aus einer flachen und langgestreckten Messkammer 8, die in Richtung ihrer Längsachse von einem Messgas 9, dessen Sauerstoffanteil bestimmt werden soll, durchströmt wird. Ein Teil der Messkammer 8 liegt in dem Magnetfeld 10 eines hier nicht gezeigten wechselstromgespeisten Elektromagneten. Ein zur Erzielung des Messeffekts notwendiges Hilfs- oder Vergleichsgas 11 strömt durch zwei gleichförmige Hilfsgasleitungen 12, 12', von denen die eine an einer Stelle 13 mittig in den magnetfeldfreien Raum der Messkammer 8 eintritt und die andere an der gegenüberliegenden Stelle 13' im Bereich des Magnetfelds 10 einmündet. Außerhalb der Messkammer 10 münden die Hilfsgasleitungen 12, 12' in eine Verbindungsleitung 14, welche in der Mitte einen auf Strömung oder Wechseldruck ansprechenden Signalgeber 15 aufweist, der als pneumatisch-elektrischer Wandler wirkt und ein dem Sauerstoffanteil des Messgases 9 entsprechendes Messsignal abgibt. Bis hierher ist die Sauerstoffmessanordnung aus der DE 8703944 U1 bekannt.

Zur Erzeugung einer zu der Stärke des Wechselmagnetfeldes 10 proportionalen Größe gleicher Frequenz aber mit einem Phasenversatz ist eine Vergleichskammer 16 vorgesehen, die parallel zu der Messkammer 8 an einander gegenüberliegenden Stellen 17, 17' an die Hilfsgasleitungen 12, 12' angeschlossen ist, im Unterschied zu der Messkammer 8 aber nur von dem Hilfsoder Vergleichsgas 11 durchströmt wird. Wie auch bei der Messkammer 8 liegt bei der Vergleichskammer die Anschlussstelle 17 der Hilfsgasleitung 12 im magnetfeldfreien Raum und die andere Anschlussstelle 17' der Hilfsgasleitung 12' im Bereich des Magnetfeldes 10. Unter der Voraussetzung, dass das Hilfsgas 11 einen konstante Sauerstoffgehalt enthält (z. B. Luft) wird in der Verbindungsleitung 14 eine zusätzliche Strömung bzw. ein zusätzlicher Wechseldruck erzeugt, die bzw. der von der Magnetfeldstärke abhängt aber von dem Messgas 9 unabhängig ist. Durch unterschiedliche Leitungslängen (Verzögerungsglied 18) zwischen der Messkammer 8 und der Verbindungsleitung 14 einerseits und der Vergleichskammer 16 und der Verbindungsleitung 14 andererseits wird eine vorgegebene Phasenverschiebung zwischen dem von der Messkammer 8 kommenden Strömungs- oder Wechseldruckanteil und dem Strömungs- bzw. Wechseldruckanteil aus der Vergleichskammer 16 erzielt.

Es ist auch möglich, auf die Vergleichskammer 16 zu verzichten und das Magnetgeld 10 derart auszurichten, dass es in einer der Hilfsgasleitungen 12, 12' oder, von dem Signalgeber 15 aus gesehen, in einer Seite der Verbindungsleitung 14 wirkt und dort die zusätzliche Strömung bzw. den zusätzlichen Wechseldruck erzeugt.

Anstelle des einen Magnetfeldes 10 können auch zwei Wechselmagnetfelder gleicher Frequenz aber mit Phasenverschiebung zueinander erzeugt werden, von denen das eine die Messküvette 8 und das andere die Vergleichsküvette 16 durchsetzt.

Es ist auch denkbar, die zusätzliche Strömung bzw. den zusätzlichen Wechseldruck mittels eines in einer der Hilfsgasleitungen 12, 12' oder, von dem Signalgeber 15 aus gesehen, in einer Seite der Verbindungsleitung 14 angeordneten Gebers, z. B. Schallgeber, unmittelbar zu erzeugen.

Figur 6 zeigt ein alternatives Ausführungsbeispiel der paramagnetischen Sauerstoffmessanordnung, das sich von dem nach Figur 5 dadurch unterscheidet, dass die Vergleichskammer 16 unabhängig von der Messkammer 8 mit einem sauerstoffhaltigen Vergleichsgas 19 durchströmt wird, so dass das Hilfsgas 11 für die Messkammer 8 sauerstofffrei sein kann, z. B, Stickstoff. Anstelle der fluidischen Parallelschaltung von Vergleichskammer 16 und Messkammer 8 sind die Anschlussstellen 17, 17' miteinander über eine separate Verbindungsleitung 14' verbunden, die einen eigenen Signalgeber 15' enthält. Durch unterschiedliche Leitungslängen zwischen den Stellen 13 bzw. 13' und dem Signalgeber 15 einerseits und den Stellen 17 bzw. 17' und dem Signalgeber 15' andererseits wird eine vorgegebene Phasenverschiebung zwischen den von beiden Signalgebern 15 und 15' erzeugten elektrischen Signalen erzielt, die addiert oder voneinander subtrahiert werden.

Das in Figur 7 gezeigte Ausführungsbeispiel unterscheidet sich schließlich von dem nach Figur 6 dadurch, dass die Vergleichskammer 16 einen abgeschlossenen Raum bildet, der mit dem Vergleichsgas 19 gefüllt ist.

## Patentansprüche

1. Messverfahren, bei dem am Anfang einer Messkette eine Messgröße (S) aufgenommen und im Verlauf der Messkette durch Umwandlung zu einem Messergebnis (E) weiterverarbeitet wird, wobei an einer ersten Stelle (5) der Messkette die originale oder umgewandelte Messgröße (S) mit einer vorgegebenen Modulationsfrequenz (f₀) moduliert wird, **dadurch gekennzeichnet,**
- **dass** an einer zweiten Stelle (6) der Messkette, die in Richtung der Weiterverarbeitung hinter der ersten Stelle (5) liegt, zu der umgewandelten Messgröße (S1) eine Größe (N) aufaddiert wird, die dieselbe Frequenz (f₀) wie die Modulation aufweist, gegenüber dieser aber um einem vorgegebenen Phasenwinkel (ϕ₀) verschoben ist, so dass das Messergebnis einen durch Amplitude (|S2|) und Phase (ϕ) beschriebenen Vektor beinhaltet,
- **dass** die Messkette mit unterschiedlichen bekannten Werten der Messgröße (S) kalibriert wird, wobei unterschiedliche Vektoren erhalten werden, die eine Kennlinie (K) definieren, und
- **dass** ein unbekannter Wert der Messgröße (S) aus demjenigen Punkt (7) der Kennlinie (K) ermittelt wird, in dem der dabei erhaltene Vektor (S2_{F}) oder seine Verlängerung die Kennlinie (K) schneidet.

2. Messverfahren nach Anspruch 1, **dadurch gekennzeichnet, dass** die zu der umgewandelten Messgröße aufaddierte Größe (N) aus der Modulation der Messgröße (S) abgeleitet wird, so dass die Amplitude der Größe (N) proportional zur Modulationstiefe ist.

3. Messverfahren nach Anspruch 1 oder 2, **dadurch gekennzeichnet, dass** zur paramagnetischen Messung des Sauerstoffgehalts eines Messgases (9), sowohl das Messgas (9) als auch ein Vergleichsgas (11, 19) mit konstantem Sauerstoffgehalt einem Wechselmagnetfeld (10) ausgesetzt werden, in dem sich die Sauerstoffmoleküle in Richtung höherer Feldstärke bewegen, wobei aus der Bewegung der Sauerstoffmoleküle in dem Messgas (9) und aus der Bewegung der Sauerstoffmoleküle in dem Vergleichsgas (11, 19) resultierende Änderungen der lokalen Dichte, Strömungen oder Druckänderungen des Messgases (9) entweder überlagert, gemeinsam erfasst und in ein elektrisches Signal zur Weiterverarbeitung umgewandelt werden oder getrennt erfasst, in zwei elektrische Signale umgewandelt und die Signale zur Weiterverarbeitung addiert oder subtrahiert werden.

4. Messverfahren nach Anspruch 3, **dadurch gekennzeichnet, dass** der Phasenwinkel (ϕ₀) dadurch erzeugt wird, dass zwischen den Stellen (13', 17') an denen das Messgas (9) und das Vergleichsgas (11, 19) dem Wechselmagnetfeld (10) ausgesetzt werden und dem Ort, wo die resultierende Änderungen der lokalen Dichte, Strömungen oder Druckänderungen erfasst werden, unterschiedlich lange Gaswege (Verzögerungsglied 18) vorgesehen sind.

## Claims

1. Measurement method, in which, at the start of a measurement chain, a measured variable (S) is picked up and is further-processed over the course of the measurement chain by means of conversion to give a measurement result (E), the original or converted measured variable (S) being modulated at a predetermined modulation frequency (f₀) at a first point (5) in the measurement chain, **characterized**
- **in that**, at a second point (6) in the measurement chain, which is after the first point (5) in the direction of further-processing, a variable (N) is added to the converted measured variable (S1), said variable (N) having the same frequency (f₀) as the modulation but being shifted with respect to this through a predetermined phase angle (ϕ₀), with the result that the measurement result contains a vector described by amplitude (|S2|) and phase (ϕ),
- **in that** the measurement chain is calibrated using different known values for the measured variable (S), with different vectors being obtained which define a characteristic (K), and
- **in that** an unknown value for the measured variable (S) is determined from that point (7) of the characteristic (K) at which the vector (S2_{F}) obtained in the process or its extension intersects the characteristic (K).

2. Measurement method according to Claim 1, **characterized in that** the variable (N) which is added to the converted measured variable is derived from the modulation of the measured variable (S), with the result that the amplitude of the variable (N) is proportional to the modulation depth.

3. Measurement method according to Claim 1 or 2, **characterized in that**, for the paramagnetic measurement of the oxygen content of a measurement gas (9), both the measurement gas (9) and a comparison gas (11, 19) with a constant oxygen content are subjected to an alternating magnetic field (10), in which the oxygen molecules move in the direction of higher field strength, wherein changes in the local density, flows or changes in the pressure of the measurement gas (9) resulting from the movement of the oxygen molecules in the measurement gas (9) and from the movement of the oxygen molecules in the comparison gas (11, 19) are either superimposed, detected jointly and converted into an electrical signal for further-processing or are detected separately, converted into two electrical signals and the signals for further-processing are added or subtracted.

4. Measurement method according to Claim 3, **characterized in that** the phase angle (ϕ₀) is produced by virtue of the fact that gas paths of different lengths (delay element 18) are provided between the points (13', 17') at which the measurement gas (9) and the comparison gas (11, 19) are subjected to the alternating magnetic field (10) and the location where the resultant changes in the local density, flows or changes in pressure are detected.

## Revendications

1. Procédé de mesure, dans lequel on enregistre, au début d'une chaîne de mesure, une grandeur ( S ) de mesure et, au cours de la chaîne de mesure, on la retraite par une transformation en un résultat ( E ) de mesure, dans lequel, en un premier point ( 5 ) de la chaîne de mesure, on module, par une fréquence (f₀) de modulation donnée à l'avance, la grandeur ( S ) de mesure originale ou transformée, **caractérisé**
- **en ce qu'**en un deuxième point ( 6 ) de la chaîne de mesure, qui se trouve derrière le premier point ( 5 ), dans le sens du retraitement, on ajoute, à la grandeur ( S1 ) de mesure transformée, une grandeur (N), qui a la même fréquence ( f₀ ) que la modulation, mais qui, par rapport à celle-ci, est décalée d'un angle ( ϕ₀ ) de phase donné à l'avance, de manière à ce que le résultat de la mesure contienne un vecteur décrit par une amplitude ( |S2| ) et une phase ( ϕ ),
- **en ce que** l'on étalonne la chaîne de mesure par des valeurs connues différentes de la grandeur ( S ) de mesure, en obtenant des vecteurs différents, qui définissent une courbe ( K ) caractéristique et
- **en ce que** l'on détermine une valeur inconnue de la grandeur
( S ) de mesure, à partir du point ( 7 ) de la courbe ( K ) caractéristique, où le vecteur ( S2_{F} ) ainsi obtenu ou son prolongement coupe la courbe ( K ) caractéristique.

2. Procédé de mesure suivant la revendication 1, **caractérisé en ce que** l'on déduit la grandeur ( N ) ajoutée à la grandeur de mesure transformée de la modulation de la grandeur ( S ) de mesure, de manière à ce que l'amplitude de la grandeur ( N ) soit proportionnelle à la profondeur de modulation.

3. Procédé de mesure suivant la revendication 1 ou 2, **caractérisé en ce que**, pour la mesure paramagnétique de la teneur en oxygène d'un gaz ( 9 ) à mesurer, on soumet, tant le gaz ( 9 ) à mesurer qu'également un gaz ( 11, 19 ) de comparaison ayant une teneur en oxygène constante, à un champ ( 10 ) magnétique alternatif, dans lequel les molécules d'oxygène se déplacent en direction de l'intensité du champ la plus grande, des variations, provenant du déplacement des molécules d'oxygène dans le gaz ( 9 ) à mesurer et du déplacement des molécules d'oxygène dans le gaz ( 11, 19 ) de comparaison, de la masse volumique locale des courants ou des variations de pression du gaz ( 9 ) à mesurer sont détectées conjointement en étant superposées et transformées en un signal électrique pour le retraitement ou détectées séparément, transformées en deux signaux électriques et les signaux sont additionnés ou soustraits pour le retraitement.

4. Procédé de mesure suivant la revendication 3, **caractérisé en ce que** l'on produit l'angle (ϕ₀) de phase par le fait, qu'entre les points ( 13', 17' ) ou le gaz ( 9 ) à mesurer et le gaz ( 11, 19 ) de comparaison sont soumis au champ ( 10 ) magnétique alternatif et l'endroit où les variations, qui en proviennent, de la masse volumique locale, des courants ou des variations de pression sont détectées, on prévoit des trajets de gaz de longueur différente ( élément 18 ) de retard.
